**Europäisches Patentamt**

**European Patent Office**

**Office européen des brevets**

(19)

(11) Veröffentlichungsnummer : **0 379 997 B1**

(12) **EUROPÄISCHE PATENTSCHRIFT**

(45) Veröffentlichungstag der Patentschrift :
**02.09.92 Patentblatt 92/36**

(51) Int. Cl.$^5$ : **C02F 1/52, C02F 1/28**

(21) Anmeldenummer : **90101103.1**

(22) Anmeldetag : **19.01.90**

(54) **Verfahren zur Erhöhung der Effektivität von Wasserreinigungsanlagen.**

(30) Priorität : **24.01.89 HU 28989**

(43) Veröffentlichungstag der Anmeldung :
**01.08.90 Patentblatt 90/31**

(45) Bekanntmachung des Hinweises auf die
Patenterteilung :
**02.09.92 Patentblatt 92/36**

(84) Benannte Vertragsstaaten :
**AT CH DE IT LI**

(56) Entgegenhaltungen :
**DE-A- 1 517 912**
**DE-A- 3 603 094**
**GB-A- 2 004 535**
**CHEMICAL ABSTRACTS, vol. 99, Nr. 14, 3.**
**Oktober 1983, Seite 303, Zusammenfassung**
**Nr. 110256q, Columbus, Ohio, US;**
**"Sludgedewatering"**

(73) Patentinhaber : **NOVEX NEMZETKÖZI**
**TECHNOLOGIATRANSZFER**
**KÜLKERESKEDELMI RESZVENYTARSASAG**
**Könyves K.krt. 76**
**H-1087 Budapest (HU)**

(72) Erfinder : **Erdelyi, Jozsef, Dr.**
**Robert K. Krt. 22**
**H-1138 Budapest (HU)**
Erfinder : **Kutasi, Tamas, Dr.**
**Kiralyhelmec u. 12**
**H-1037 Budapest (HU)**
Erfinder : **Csizmadia, Istvanné, Dr.**
**Pozsonyi u. 28**
**H-1039 Budapest (HU)**
Erfinder : **Samuel, Zsuzsa, Dr.**
**Pozsonyi u. 28**
**H-1039 Budapest (HU)**
Erfinder : **Varga, Gyözö**
**Kövér Lajos tér 13**
**H-1149 Budapest (HU)**
Erfinder : **Balint, Gyula,**
**Szabadsag u. 2**
**H-2400 Dunaujvaros (HU)**
Erfinder : **Bozsits, Béla**
**Berecz B. u. 10**
**H-2400 Dunaujvaros (HU)**
Erfinder : **Renyi, Péter**
**Rath György u. 27**
**H-1122 Budapest (HU)**
Erfinder : **Reha, Ilona**
**Juhasz Gy. u. 32**
**H-1039 Budapest (HU)**

(74) Vertreter : **Patentanwälte Viering & Jentschura**
**Steinsdorfstrasse 6 Postfach 22 14 43**
**W-8000 München 22 (DE)**

**EP 0 379 997 B1**

**Beschreibung**

Gegenstand der Erfindung ist ein Verfahren zur Erhöhung der Effektivität von Wasserreinigungsanlagen mit Hilfe von Gemischen aus Mineralsubstanzen enthaltenden Suspensionen.

In der Industrie werden zur Reinigung von Abwässern zur Zeit drei in ihrem Charakter grundlegend unterschiedliche Prinzipien angewandt. Diese sind Filtration, Sedimentation und Flotation.

Nach diesen Reinigungsmethoden können zum Entfernen der im Abwasser zurückgebliebenen organischen Verunreinigungen auch noch biologische Methoden zur Anwendung gelangen.

Eine Minderung des gelösten Schmutzstoffgehaltes der Abwässer kann zur Zeit nur durch eine Prezipitation, das heißt Fällung, oder einen Ionenaustausch gelöst werden. Der gelöste Schmutzstoff wird nach Zugabe eines bestimmten chemischen Hilfsstoffes ausgefällt, so daß er mit diesem einen in Wasser unlösbaren Niederschlag bildet. Der anfallende Niederschlag wird im allgemeinen durch Filtration oder Sedimentation, d. h. Absetzen aus dem System entfernt.

Die zeitgemäßen, mit Ionenaustausch arbeitenden Verfahren erfordern die Verwendung von speziellen, im allgemeinen ionenselektiven Kunstharzen bzw. Stoffen und sind so ziemlich kostenaufwendig.

Das Entfernen des schwebenden Schmutzstoffgehaltes der Abwässer kann in herkömmlicher Weise durch Filtration oder Sedimentation bzw. Flotation in Abhängigkeit von der Größe der Feinstruktur und der Materialkennwerte der Schmutzstoffteilchen vorgenommen werden.

Zur Verbesserung des Wirkungsgrades der nach den herkömmlichen Prinzipien arbeitenden Reinigungsanlagen werden unterschiedliche chemische Hilfsstoffe zum Beispiel Polyelektrolyte verwendet, die eine Flokkung der Schmutzstoffe herbeiführen und dadurch eine Ausfiltrierung fordern.

Die Filtration kann weiter verbessert werden, wenn die schwebenden Schmutzstoffteilchen mit Hilfe von Koagulierungsmitteln in größere Agglomerate umgewandelt werden, deren Wasserrückhaltevermögen geringer ist. Auf diese Weise werden die Schmutzstoffe leicht filtrierbar und können aus dem System entfernt werden.

Die Wirksamkeit der Sedimentation kann durch chemische Stoffe erhöht werden, die die relative Dichte der schwebenden Schmutzstoffteilchen wirksam erhöhen, während die Effektivität der Flotation durch chemische Stoffe erhöht werden kann, die die relative Dichte der schwebenden Schmutzstoffteilchen vermindern.

Die Effektivität dieser Verfahren kann auch durch die Anwendung von mechanischen Maßnahmen und Einwirkungen weiter verbessert werden (zum Beispiel Vakuum, laminare Strömungen, Marmotage und dergleichen).

Grundlegendes Ziel der Abwasserreinigung ist eine vollkommene Beseitigung der schädlichen gelösten Stoffe und der schwebenden Schmutzstoffteilchen sowie die Herabsetzung des chemischen und biologischen Sauerstoffbedarfes des zur Ableitung gelangenden Abwassers, die nicht einmal als Ergebnis komplizierter Kombinationen der herkömmlichen Reinigungsverfahren und einer gemeinsamen Anwendung kostenaufwendiger chemischer Hilfsmittel vollkommen gelöst werden können.

Die geringe Effektivität der nach dem derzeitigen Stand der Technik angewandten Abwasserreinigungsverfahren kann im allgemeinen damit erklärt werden, daß nur spezifische Wirkungen angewandt werden und die synenergetische Wirkung der unterschiedlichen Prinzipien nicht berücksichtigt wird. In ebenfalls unzureichendem Maße wird die bedeutende Rolle des Strömungsdoppelschichtpotentiales der im wäßrigen Medium strömenden Schmutzstoffteilchen im Reinigungsprozeß berücksichtigt. Ist nämlich die Differenz des Strömungsdoppelschichtpotentials, mit anderen Worten des Zetal-potentials, vielleicht zwischen den im System schwebenden Teilchen und den zugegebenen chemischen Hilfsstoffteilchen minimal, so ist der Wirkungsgrad der Reinigungseinrichtungen unbefriedigend.

Aufgabe der Erifndung ist es demgemäß, ein Verfahren für Abwasserreinigungsaufgaben zu schaffen, mit dessen Hilfe der gelöste und der schwebende Stoffgehalt des Abwassers in Filtrations-, Flotations- und Sedimentations-Reinigungsanlagen in gleicher Weise effektiv vermindert werden kann.

Im Verlaufe der Untersuchung der Wirkung verschiedener Polyelektrolyte und Mineralstoffe wurde in Erfahrung gebracht, daß bei der Zugabe von kationenhaltigem Polyelektrolyt zu den Gemischen von hohe Adsorptionskapazität und große spezifische Oberfläche aufweisenden Mineralstoffen deren in wäßrigem Medium gemessenes negatives Zeta-Potential in ein positives umschlug. Bei Zuführung dieses Stoffsystems noch vor den nach verschiedenen Prinzipien arbeitenden Reinigungsanlagen verbesserte sich die Effektivität der Anlage in überraschenden Ausmaße.

Die gestellt Aufgabe wurde mit dem erfindungsgemäßen Verfahren dadurch gelöst, daß in das zu reinigende Abwasser unmittelbar vor der Wasserreinigungsanlage eine wäßrige Suspension zugeführt wird, die hohe Adsorptionskapazität aufweisende Mineralstoffe, große spezifische Oberfläche aufweisende Mineralstoffe sowie kationenhaltigen einen Polyelektrolyt enthält.

Die wäßrige Suspension wird zweckdienlicherweise mit einer Dichte von 50-300 g/l und aus

2

EP 0 379 997 B1

50-90 Masse% Mineralstoff mit hoher Adsorptionskapatität

5-40 Masse% Mineralstoff mit großer spezifischer Oberfläche und

0,1-6 Masse% kationenhaltigem Polyelektrolyt hergestellt.

Als Mineralstoff hoher Absorptionskapazität werden vorzugsweise Montmorilonit, Silit, Kaolin, Zeolit und ähnliche Stoffe verwendet. Als Mineralstoff mit großer Oberfläche kann vermahlener expandierter Perlit gut verwendet werden. Als kationenhaltiger Polyelektrolyt hat sich modifiziertes Polyakrylamid (Polyamid-amin und/oder PolyDADMAC) gut bewährt.

Besonders hervorragende Ergenisse wurden in dem Falle erhalten, wenn als Mineralstoff mit hoher Adsorptionskapazität ein kaolinartiger Stoff von Typ Montmorilonit (zum Beispiel ein Füllstoff der Marke Aspanger A2 oder Aspang A3 der Aspanger Kaolin und Steinwerke AG) und als Mineralstoff mit großer spezifischer Oberfläche expandierter vermahlener Perlit (zum Beispiel Perlit K-2 Koszeg), als Polyelektrolyt modifiziertes kationenhaltiges Polyakrylamid (z. B. Percoll DPX Allied Colloid) verwendet wurden. Das Zeta-Potential der wäßrigen Suspension des angegebenen Stoffgemisches beträgt +30 mV bis +45 mV, in Abhängigkeit von dem Typ der Molekularmasse und der Kationenaktivität des Polyelektrolyts.

Im Ergebnis der syneregetischen Wirkung erhöht die wäßrige Suspension dieses Materialgemisches die Effektivität der nach allen drei Prinzipien arbeitenden Reinigungsanlage in überraschendem Maße.

Dies kann dadurch erklärt werden, daß die Schmutzstoffteilchen in einem wäßrigen Medium in überwiegendem Maße eine negative Oberflächenladung aufweisen und bei Zuführung eines starke positive Oberflächenladung aufweisende Teilchen enthaltenden Materialgemisches in das System außerordentlich intensive Heterokoagulationsvorgänge einsetzen, so daß um die eine positive Oberflächenladung aufweisenden Reinigungsmittelteilchen Agglomerate der Schmutzstoffteilchen entstehen. Dadurch nimmt die Größe der im System befindlichen Konglomerate zu und im Falle einer laminaren Strömung verbessert sich auch die Sedimentation bzw. die Filtrationswirkung.

Ein wesentliches Merkmal des erfindungsgemäßen Verfahrens besteht demgemäß darin, daß Mineralstoffe mit hohen spezifischen Oberflächen und Mineralstoffe mit hohen Adsorptionskapazitäten mit kationenhaltigen Polyelektrolyten in wäßrigen Medien in solche mit positiver Oberflächenladung umgewandelt werden.

Wenn durch dieses System Luft durchströmen gelassen wird, bleiben die dispergierten Luftbläschen an den große spezifische Oberfläche aufweisenden vermahlenen expandierten Perlitteilchen haften und vermindern dadurch die Dichte der Konglomerate im wesentlichem Maße, wodurch die Effektivität der nach dem Flotationsprinzip arbeitenden Anlagen in einem überraschenden Maße verbessert wird.

Die synergetische Wirkung tritt auch so in Erscheinung, daß das Gemisch der eine große Adsorptionskapazität und große spezifische Oberfläche aufweisenden Mineralsubstanzen auch über Ionensorptionseigenschaften verfügt, in dessen Ergebnis die im Abwasser gelösten und mit den herkömmlichen Methoden bisher ziemlich schwer entfernbaren gelösten Stoffe ebenfalls in wesentlichem Maße gebunden und so aus dem Abwasser entfernt werden. Dadurch vermindert sich auch der Sauerstoffbedarf des Abwassers.

Zur Erhöhung der Effektivität der Wasserreinigungsanlagen werden kationenhaltige Materialgemische spezieller Zusammensetzung hergestellt. Die Mineralsubstanzen (Kaolin, Perlit) werden in wäßrigem Medium mit kationenhaltigem Polyelektrolyt vermischt und die so zübereitete Suspension dem Abwasser unmittelbar vor der Abwasserreinigungsanlage zugegeben. Die Dichte der Suspension hängt von der Zusammensetzung des Gemisches ab. Die erfindungsgemäße Lösung wird durch folgende (in der Papierindustrie übliche) Beispiele veranschaulicht:

## Beispiel 1

Bei einer nach der Sedimentationsmethode (Absetztrichter) arbeitenden Wasserreinigungsanlage zur Behandlung von Papierindustrieabwasser wurde in das zur Reinigung gelangende Abwasser ein Gemisch von kationisierter Mineralsubstanz in der Form einer Suspension mit einer Dichte von 100 g/l zugegeben. Die reinigende Wirkung kann mit dem Ausmaß des Rückganges der Schwebestoffe und des chemischen Sauerstoffbedarfes charakterisiert werden. Die erhaltenen Ergebnisse werden in der Tabelle 1 veranschaulicht.

EP 0 379 997 B1

## Tabelle 1

|  | Schwebestoffe g/l | chemischer Sauer- stoffbedarf mg/l |
|---|---|---|
| vor dem Absetzen | 3,1 | 2400 |
| nach dem Absetzen | 1,5 | 800 |
| mit Polyelektrolyt (2 g/m$^3$ Abwasser) | 1,1 | 500 |
| mit kationenhaltigem Gemisch gemäß der Erfindung: Aspanger A-2 89 g, K-2 Perlit 10 g, Percoll 195 1 g, (100 g/m$^3$ Abwasser) | 0,5 | 170 |

Aus der Tabelle ist zu ersehen, daß die Wirksamkeit der Absetzanlage mit einem Polyelektrolyt erhöht werden kann, die Wirkung des Gemisches gemäß der Erfindung ist jedoch wesentlich besser.

Beispiel 2

Bei einer nach der Flotationsmethode arbeitenden Abwasserreinigungsanlage (Typ Arwag) wurde dem Papierindustrieabwasser in dem Chemikalienzuführbecken eine kationisierte Mineralsubstanzsuspension (mit der Dichte von 120g/l) gemäß Beispiel 1 zugemischt. Die Ergebnisse sind in Tabelle 2 gezeigt.

## Tabelle 2

|  | Schwebestoffe g/l | chemischer Sauer- stoffbedarf mg/l |
|---|---|---|
| vor der Flotation | 2,8 | 2150 |
| nach der Flotation ohne Zusätze | 1,1 | 580 |
| mit Polyelektrolyt (2 g/m$^3$ Abwasser) | 0,5 | 170 |
| mit kationenhaltigem Gemisch gemäß der Erfindung: Aspanger A-2 89 g, K-2 Perlit 10 g, Percoll 195 1 g, (100 g/m$^3$ Abwasser) | 0,2 | 35 |

Aus der Tabelle geht klar hervor, daß mit dem entwickelten erfindungsgemäßen Verfahren ein wesentlich

4

EP 0 379 997 B1

besseres Ergebnis zur Erhöhung der Effektivität der Anlage erreicht werden kann.

Beispiel 3

Bei der nach dem Filtrationsprinzip arbeitenden Wasserreinigungsanlage (Polydisk) wurde in das zu reinigende Papierindustrieabwasser, das bei der Produktion von hohen Abfallgehalt aufweisendem Papiergut anfiel, das erfindungsgemäße kationisierte Mineralstoffgemisch in einer Menge von 150 g/l zuzugeben (Tabelle 3).

## Tabelle 3

| | Schwebestoffe g/l | chemischer Sauerstoffbedarf mg/l |
|---|---|---|
| vor der Filtration | 5,1 | 8200 |
| nach der Filtration ohne Zusatzstoffe | 1,6 | 4000 |
| mit kationenhaltigem Gemisch gemäß der Erfindung: Aspanger A-2 89 g, K-2 Perlit 10 g, Percoll 195 1 g, ($100 \ g/m^3$ Abwasser) | 0,8 | 1420 |

Mit Hilfe dieses Verfahrens kann die Effektivität der Filtrieranlagen in wesentlichem Maße verbessert werden.

Auf einzelnen Einsatzgebieten ist die Anwendung des erfindungsgemäßen Verfahrens mit weiteren wirtschaftlichen Ergebnissen verbunden. So können zum Beispiel bei der Reinigung von Papierindustrieabwässern die aus der Wasserreinigung zurückgewonnenen Faserreste (Feinfaser) und der Füllstoff in den Produktionsvorgang zurückgeführt werden, da das zum erfindungsgemäßen Verfahren verwendete Stoffsystem sich in die Struktur der Papierblätter einfügend von keiner störenden Wirkung auf die Eigenschaften des Papiergutes ist. Dadurch kann der spezifische Faserverbrauch der Papierproduktion herabgesetzt werden, was ein ernst zu nehmendes wirtschaftliches Ergebnis darstellt.

## Patentansprüche

1. Verfahren zur Erhöhung der Effektivität von Wasserreinigungsanlagen, dadurch gekennzeichnet, daß in das zu reinigende Abwasser unmittelbar vor der Wasserreinigungsanlage eine wäßrige Suspension zugegeben wird, die hohe Adsorptionskapazität aufweisende Mineralstoffe, große spezifische Oberflächen aufweisende Mineralstoffe sowie kationenhaltiges Polyelektrolyt enthält.

2. Verfahren nach Anspruch 1, dadurch gekennzeichnet, daß die wäßrige Suspension mit einer Dichte von 50-300 g/l und aus 50-90 Masse% Mineralstoff mit hoher Adsorptionskapazität 5-40 Masse% Mineralstoff mit großer spezifischer Oberfläche und 0,1-6 Masse% kationenhaltigem Polyelektrolyt hergestellt wird.

3. Verfahren nach Anspruch 1 bzw. 2, dadurch gekennzeichnet, daß als Mineralstoff hoher Adsorptionskapazität Montmorilonit, Silit, Kaolin, Zeolit oder ähnliche Stoffe verwendet werden.

4. Verfahren nach einem der Ansprüche 1 bis 3, dadurch gekennzeichnet, daß als Mineralstoff mit großer spezifischer Oberfläche vermahlener expandierter Perlit verwendet wird.

5. Verfahren nach einem der Ansprüche 1 bis 4, dadurch gekennzeichnet, daß als kationenhaltiger Polyelektrolyt Polyakrylamid verwendet wird.

5

## Claims

1. Method to increase the effectivity of water cleaning equipment, characterized in that an aqueous suspension is added to the sewerage, which has to be cleaned, right before the water cleaning equipment, the suspension containing minerals showing a high adsorption capacity, minerals showing big specific surfaces as well as polyelectrolyte which contains cations.

2. Method according to claim 1, characterized in that the aqueous suspension is produced with a density of 50-300 g/l and of 50-90 mass% minerals with a high adsorption capacity, 5-40 mass% minerals with a big specific surface and 0,1-6 mass% polyelectrolyte which contains cations.

3. Method according to claims 1 or 2, characterized in that montmorilonite, silite, caoline, zeolite or similar substances are used as a mineral with a high adsorption capacity.

4. Method according to one of the claims 1 to 3, characterized in that ground and expanded perlite is used as a mineral with a big specific surface.

5. Method according to one of the claims 1 to 4, characterized in that polyacrylamide is used as a polyelectrolyte containing cations.

## Revendications

1. Procédé pour l'augmentation de l'effectivité d'installations de clarification d'eau, caractérisé en ce qu'une suspension aqueuse est ajoutée aux eaux d'égout, qui sont à clarifier, immédiatement avant l'installation de clarification, la suspension contenant des minéraux ayant une grande capacité d'adsorption, de grandes surfaces spécifiques ainsi que du polyélectrolyte qui contient des cations.

2. Procédé selon revendication 1, caractérisé en ce que la suspension aqueuse est produite avec une densité de 50-300 g/l et de 50-90% de masse de minéral avec une grande capacité d'adsorption, 5-40% de masse de minéral avec une grande surface spécifique et 0,1-6% de masse de polyélectrolyte contenant des cations.

3. Procédé selon revendication 1 ou 2, caractérisé en ce que du montmorilonite, du silite, du kaolin, du zéolite ou des substances pareilles sont utilisées en tant que minéral de grande capacité d'adsorption.

4. Procédé selon l'une des revendications 1 à 3, caractérisé en ce que du perlite, qui a été moulu et expansé, est utilisé en tant que minéral avec une grande surface spécifique.

5. Procédé selon l'une des revendications 1 à 4, caractérisé en ce que du polyacrylamide est utilisé en tant que polyélectrolyte contenant des cations.